# EUROPEAN PATENT APPLICATION

(11) **EP 2 434 456 A2**
(43) Date of publication of application: **28.03.2012**
(21) Application number: 11182358.9
(22) Date of filing: 22.09.2011
(51) Int. Cl.: G06T 17/10, G06T 19/20

(54) **Unified handle approach for moving and extruding objects in a 3-D editor**

(30) Priority: 27.09.2010 US 386750 P; 15.09.2011 US 233550
(71) Applicant: Siemens Corporation, Iselin, NJ 08830 (US)
(72) Inventor: Mc Daniel, Richard Gary, Highstown, NJ New Jersey NJ 08520 (US)
(74) Representative: Wheatley, Alison Clare

(57) **Abstract**

A computer-implemented tool for manipulating and controlling objects within a three-dimensional (3-D) model. The tool (300) is generated by a model editor stored in a memory (104) and executed by a processor (102). The tool (300) includes a modal indication of state for whether to perform an extrusion operation, a tool origin (302) configured to indicate an object defined within the 3-D model, and a tool handle pair (306) including a first handle (306a) and a second handle (306b) configured such that the first handle (306a) and the second handle (306b) are linearly aligned along an axis that extends through the tool origin (302) such that the first handle (306a) is arrange opposite to the second handle (306b) with the tool origin (302) disposed therebetween. The axis along which the handles are aligned is further aligned and associated with a second axis corresponding to the object such that, in response to an input associated with one of the handles (306), the processor configured to generate the 3-D model and implement the model editor alters the object indicated by the tool origin (302). The alteration to the object (350) may further include an alteration of a position/orientation of the object (350) as well as production of new geometry dependent on the modal indication.

## Description

### CROSS REFERENCE TO RELATED APPLICATIONS

This patent document claims the priority benefit under 35 USC §119(e) to U.S. Provisional Application Serial No. 61/386,750, filed on September 27, 2010, and titled "Unified Handle Approach for Moving and Extruding Objects in a 3-D Editor." The entire content of this provisional application is hereby incorporated by reference.

### BACKGROUND

Geometric models such as a three-dimensional (3-D) models generated and displayed by a 3-D graphical editor implemented on a workstation often have complicated configurations that can be both time and resource intensive to edit. For example, in order to perform editing tasks such as translation, rotation, and scaling on a known 3-D graphical editor, it is necessary to access one of three different tools, commands and/or subroutines to activate the desired functionality. The distinct nature of these three functions requires additional manipulation and effort on the part of the user to activate the desired functionality and implement the task. Moreover, the 3-D graphical editor is required to perform additional processing tasks and operations to switch between the desired functionality. These additional processing tasks absorb and require processing and/or memory resources that can slow the overall performance of the 3-D graphical editor.

Known editing and/or modeling systems do not provide a mechanism to perform direct manipulation and editing of a 3-D model to implement common editing tasks such as translation, rotation, and scaling in a unified manner. Instead, known editing and/or modeling systems require multiple user actions and subroutine activations to perform the desired manipulations of the 3-D model.

### SUMMARY

This patent document relates to a tool and computer-implemented method to create and edit objects within a 3-D model utilizing direct and unified manipulation in conjunction with a 3-D graphical editor. In particular, this patent document discloses utilizing a direct manipulation handle approach to perform editing tasks such as translation, rotation, and scaling. The direct manipulation handle provides a basis for additional functionality that allows the the same graphical handles to be utilized to stretch portions of the 3-D model and to extrude and revolve portion of the 3-D model along a pathway to create new model elements and objects.

In one embodiment, a computer-implemented tool for manipulating and controlling objects within a three-dimensional (3-D) model. The tool is provided by a model editor stored in a memory and executed by a processor. The tool includes a modal indication of state for whether to perform an extrusion operation, a tool origin configured to indicate an object defined within the 3-D model, and a tool handle pair including a first handle and a second handle configured such that the first handle and the second handle are linearly aligned along an axis that extends through the tool origin such that the first handle is arranged opposite to the second handle with the tool origin disposed there between. The axis along which the handles are aligned is further aligned and associated with a second axis corresponding to the object such that, in response to an input associated with one of the handles, the processor configured to generate the 3-D model and implement the model editor alters the object indicated by the displacement of the tool origin and handles. The alteration to the object may further include an alteration of a position/orientation of the objects as well as production of new geometry dependent on the modal indication.

In another embodiment, a computer-implemented method of manipulating and controlling objects within a three-dimensional (3-D) model is disclosed. The computer-implemented method is implemented by a processor executing a model editor stored in a memory. The method includes receiving, via the model editor, a command associated with a 3-D graphical editing tool having a tool origin and pairs of tool handles arranged on opposite sides of the tool origin along Cartesian axes arranged such that the tool origin is associated with an object within the 3-D model, and the command is associated with a parameter defining the object. The method further includes displaying, via the model editor, an altered position of one of the pair of handles representative of the received command such that the position of the altered handle reflects a change in the parameter, and updating, via the model editor, the 3-D model and object defined by the parameter to reflect the change in the parameter.

In yet another embodiment, a computer-implemented method of manipulating and controlling objects within a three-dimensional (3-D) model is disclosed. The method executes on a processor based on executable instructions stored in a memory. The method includes receiving a command via an input device in communication with a 3-D graphical editing tool, associating, in response to the received command, a tool origin of the 3-D graphical editing tool with an object within the 3-D model. The 3-D graphical editing tool includes three pairs of tool handles arranged such that each pair of tool handles is orthogonal to the other pairs and equidistant from tool origin. The method further includes receiving an indication to alter a displayed position of one or more of the tool handles, converting the received indication into a parameter that alters the object within the 3-D model, and displaying, via a display device, an altered object and 3-D model.

Other embodiments are disclosed, and each of the embodiments can be used alone or together in combination. Additional features and advantages of the disclosed embodiments are described in, and will be apparent from, the following Detailed Description and the figures.

### BRIEF DESCRIPTION OF THE FIGURES

FIG. 1 illustrates a computing system that may be configured to manipulate and control objects in a three-dimensional (3-D) model, according to one embodiment;

FIG. 2 illustrates a functional block diagram of one embodiment of processor-executable instructions configured to implement a unified editing tool;

FIGS. 3A to 3C illustrate examples of editing tools that may be configured to manipulate and control objects in a three-dimensional (3-D) model as disclosed herein;

FIGS. 4A and 4B illustrate an example of a translation tool that may, in one embodiment, be implemented as disclosed herein;

FIG. 5 illustrates another example of the translation tool that may, in one embodiment, be implemented as disclosed herein;

FIG. 6 illustrates an example of an extrusion function that may be implemented in connection with the translation tool;

FIG. 7 illustrates one example of an extrusion or sweep pathway that may be implemented in connection with the unified tool; and

FIG. 8 is a flowchart of one embodiment of an editing operating that may be implemented in connection with the unified tool.

### DETAILED DESCRIPTION

This patent document relates to a graphical editing tool and one or more computer-implemented methods to create and edit objects within a 3-D model utilizing direct and unified manipulation in conjunction with a 3-D graphical editor. For example, the graphical editing tool may utilize one or more direct manipulation handles to perform editing tasks such as translation, rotation, and scaling. These one or more direct manipulation handles may be arranged along orthogonal axes to allow for manipulation of the object in, for example, the X, Y and Z directions. The one or more direct manipulation handles provide a basis for additional functionality that all the the same graphical handles to be utilized to stretch portions of the 3-D model and to perform extrusion and revolution along a pathway to create new model elements and objects.

### A. COMPUTER SYSTEM AND GRAPHICS WORKSTATION LAYOUT

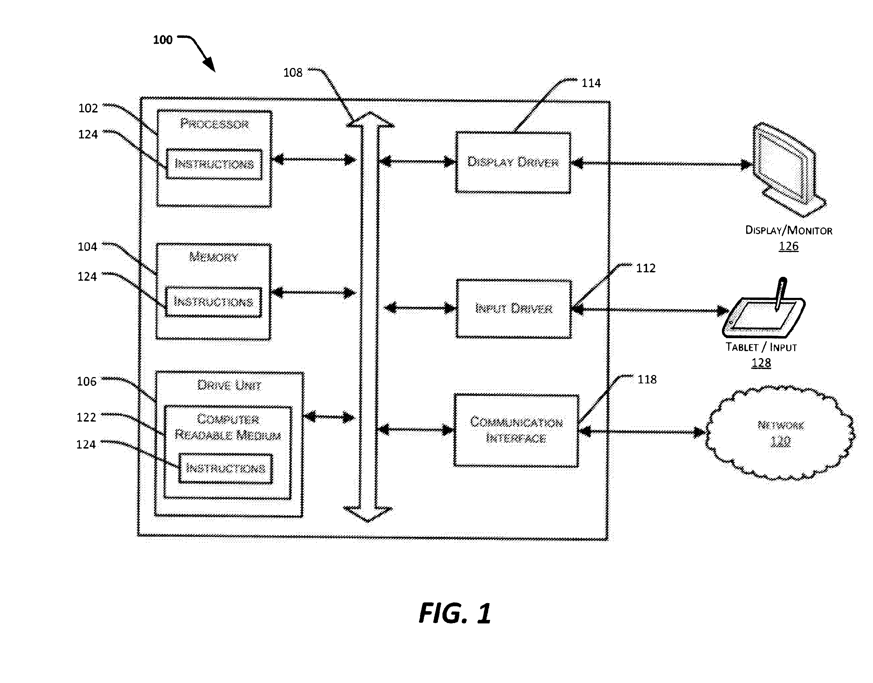

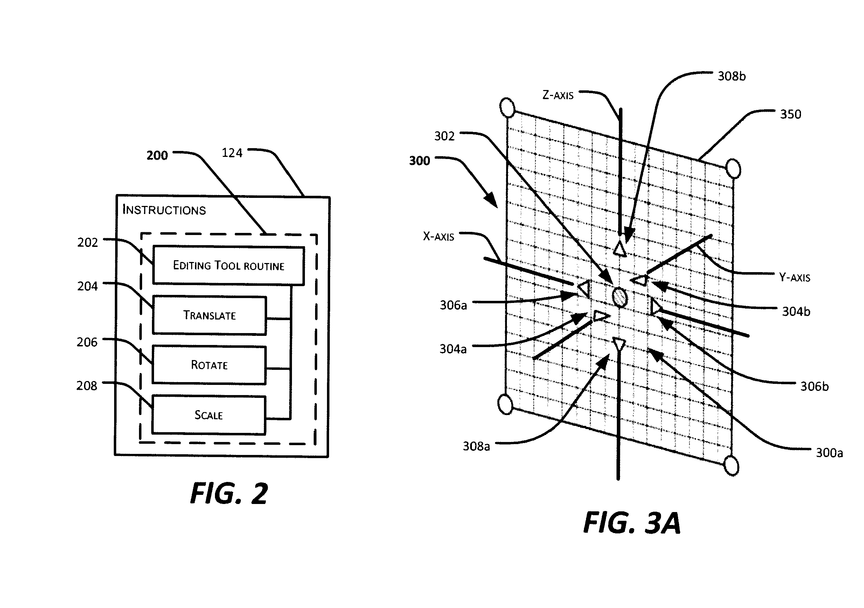

FIG. 1 illustrates a layout and configuration for a generalized computer system 100, such as a computer aided design (CAD) workstation, a personal digital assistant (PDA), a tablet computer, a smartphone, a computer, a server, or any of the other computing devices referenced herein. Additional, different, or fewer components may be provided for any specific computing device. The computer system 100 stores and executes algorithms and processor-executable instructions 124 to cause the performance of any one or more of the methods or computer based functions, such as the exemplary graphical editing routine 200 (see FIG. 2) disclosed herein. The computer system 100 may operate as a standalone device or may be connected to other computer systems or peripheral devices.

In a networked deployment, the computer system 100 may operate as a server or a client computer in a server-client network environment, or as a peer computer system in a peer-to-peer (or distributed) network environment. The computer system 100 may also be implemented as or incorporated into various devices, such as a personal computer (PC), a tablet PC, a set-top box (STB), a personal digital assistant (PDA), a mobile device, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing the processor-executable instructions 124 (sequential or otherwise) that specify actions to be taken to implement the symmetry module. In a particular embodiment, the computer system 100 may be implemented using electronic devices that provide voice, video and/or data communication. Further, while a single computer system 100 may be illustrated, the term "system" shall also be taken to include any collection of systems or sub-systems that individually or jointly execute a set, or multiple sets, of processor-executable instructions to perform one or more functions via the network.

As illustrated in FIG. 1, the computer system 100 includes a processor 102, such as, a central processing unit (CPU), a graphics-processing unit (GPU), or both. The processor 102 may be a component in a variety of systems. For example, the processor 102 may be part of a standard personal computer or a workstation. The processor hardware may incorporate one or more general processors, digital signal processors, application specific integrated circuits, field programmable gate arrays, servers, networks, digital circuits, analog circuits, combinations thereof, or other now known or later developed devices for analyzing and processing data.

The computer system 100 may include a memory 104 that can communicate via a bus 108. The memory 104 can be divided or segmented into, for example, a main memory, a static memory, and a dynamic memory. The memory 104 includes, but is not be limited to, non-transitory computer readable storage media and various types of volatile and non-volatile storage media such as: random access memory; read-only memory; programmable read-only memory; electrically programmable read-only memory; electrically erasable read-only memory; flash memory; magnetic tape or disk; optical media and the like. In one case, the memory 104 includes a cache or random access memory for the processor 102. Alternatively, or in addition to, the memory 104 may be system memory that is separated and/or distinct from the processor 102.

The memory 104 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 104 is configured to store processor-executable instructions 124 utilizable by the processor 102. The functions, acts or tasks illustrated in the figures or described herein may be performed by the programmed processor 102 executing the instructions 124 including the graphical editing module 200 (see FIG. 2) stored in the memory 104. The functions, acts or tasks may be independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

The computer system 100 may further include a display driver 114 configured to control the output of a display 126 such as a touchscreen, a liquid crystal display (LCD), an organic light emitting diode (OLED), a flat panel display, a solid state display, a cathode ray tube (CRT), a projector, a printer or other now known or later developed display device for outputting determined information. The display driver 114 acts as an interface between, for example, the display 126 and the processor 102 that allows the interaction with the software (including the processor-executable instructions 124) stored in the memory 104 or in the drive unit 106.

The computer system 100 further includes an input driver 112 configured to allow a user to interact with any of the components of system 100. The input driver 112 may provide and interface mechanism and means to connect the components of system 100 to a number pad, a keyboard, or a cursor control device, such as a mouse, or a joystick, touchscreen display, remote control or any other device operative to interact with the system 100. In one embodiment, the input driver 112 connects and communicates with a direct manipulation device such as a tablet 128. In this configuration, the manipulation of a tablet input may result in a change in one or more model objects and elements presented on the display 126.

The computer system 100, in other embodiments, includes a disk or optical drive unit 106 to accessibly interpret a computer-readable medium 122 on which software embodying algorithms or processor-executable instructions 124 are embedded. The algorithms or processor-executable instructions 124 perform one or more of the methods or logic as described herein. The instructions 124 may reside completely, or at least partially, within the memory 104 and/or within the processor 102 during execution by the computer system 100. The memory 104 and the processor 102 also may include other forms or configurations of computer-readable media as discussed above.

The computer-readable medium 122 may include processor-executable instructions 124 or receive instructions 124 responsive to a transmitted signal; so that a device connected to a network 120 or other communications means may communicate voice, video, audio, images or any other data over the network 120. Further, the processor-executable instructions 124 may be transmitted or received over the network 120 via a communication interface 118. The communication interface 118 may be implemented in software or may be a physical connection in hardware. The communication interface 118 provides a connection with the network 120, external media, the display driver 114, or any other components in the system 100 or combinations thereof. In one embodiment, the connection with the network 120 is a physical connection such as a wired Ethernet connection or may be established wirelessly such as via a cellular telephone network (GSM, CDMA), an 802.11 (Wi-Fi), 802.16 (WiMax), 802.20 (mobile broadband), 802.15.4 (ZigBee) and/or Bluetooth networks. The network 120 in other embodiments can be a public network, such as the Internet, a private network, such as an intranet, or combinations thereof, and may utilize a variety of networking protocols now available or later developed including, but not limited to TCP/IP based networking protocols.

The computer-readable medium 122 may be a single medium or may comprise multiple mediums such as a centralized or distributed database and/or associated caches and servers that store one or more sets of instructions. The term "computer-readable medium" is generally utilized to describe any medium that may be capable of storing, encoding or carrying an algorithm or set of instructions for execution by a processor or that may cause a computer system to perform any one or more of the methods or operations disclosed herein.

The computer-readable medium 122 may include a solid-state memory such as a memory card or other package that houses one or more non-volatile read-only memories. The computer-readable medium 122 further includes or encompasses random access memory or other volatile re-writable memory. Additionally, the computer-readable medium 122 may include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that may use a tangible storage medium. The present disclosure may be considered to include any one or more of a computer-readable medium, other equivalents and successor media, in which data or instructions may be stored.

In other embodiments, dedicated hardware implementations, such as application specific integrated circuits (ASIC), programmable logic arrays and other hardware devices, may be constructed to implement one or more of the methods described herein. Applications that include the apparatus and systems of various embodiments may broadly include a variety of electronic and computer systems. One or more embodiments described herein may implement functions using two or more specific interconnected hardware modules or devices with related control and data signals that may be communicated between and through the modules, or as portions of an application-specific integrated circuit. Accordingly, the present system may encompass software, firmware, and hardware means for implementing and utilizing the teaching and disclosure presented and discussed herein.

### B. GRAPHICAL EDITING MODULE

FIG. 2 illustrates a functional block diagram of processor-executable instructions configured to implement the graphical editing module 200. The graphical editing module 200 includes, in this exemplary embodiment, an editing tool routine 202 that may, in turn, include or communicate with a translate module 204, a rotate module 206 and a scale module 208.

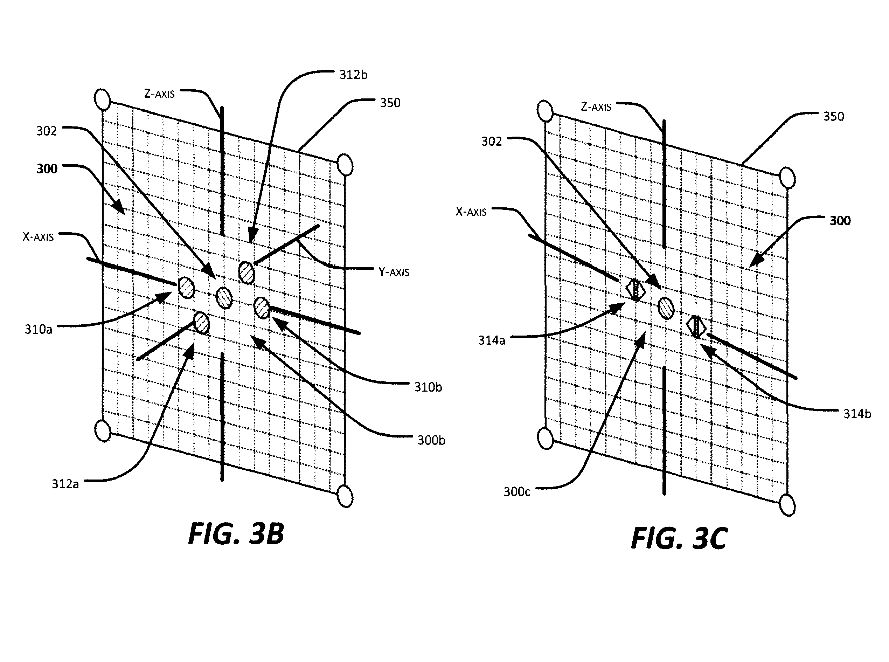

In this exemplary embodiment, graphical editing module 200 utilizes the editing tool routine 202 to generate a unified editing and manipulation tool 300 such as the translation tool 300a shown in FIG. 3A. FIGS. 3B and 3C illustrate alternate configurations of the unified tool 300 (individually identified as tools 300a, 300b and 300c) which may be generated by the processor 102 executing the graphical editing module 200 and displayed via the display 126. The unified tool 300 is configured to operate according to one or more different modes or states. These modes or states, in turn, may correspond to the one or more of the operations and tools 300a, 300b and 300c disclosed and discussed herein. Moreover, these modes or states may represent a combination of one or more tools or functions associated with the unified tool 300 and the graphical editing module 200. For example, as the state of the unified tool 300 alters to implement the desired functionality, a modal indication may be generated by the editing tool routine 202 and communicated to the graphical editing module 200. The modal indication may operate as an identification indicator or flag representing the active functionality and features (or combinations thereof) in use by the graphical editing module 200. The translation tool 300a can, in this exemplary embodiment, be generated by the translate module 204. The translate module 204 may be utilized by the graphical editing module 200 to move an object 350, which may be a portion or all of a 3-D module, along any of the X, Y and Z axes (see FIG. 3A). The tools 300a, 300b and 300c are collectively referred to herein as the unified tool 300 or simply the tool 300.

The graphical editing module 200 and the editing tool routine 202 may, in cooperation with the rotate module 206, generate the rotation tool 300b shown in FIG. 3B. The rotation tool 300b can, in this exemplary embodiment, be generated by the rotate module 206. The rotate module 204 may be utilized by the graphical editing module 200 to rotate the object 350 about, for example, the Z-axis (see FIG. 3B). Similarly, the graphical editing module 200 and the editing tool routine 202 may, in cooperation the with the scale module 208, generate the scaling tool 300c shown in FIG. 3B. The scaling tool 300c can, in this exemplary embodiment, be generated by the scale module 208. The scale module 204 may be utilized by the graphical editing module 200 to shrink or enlarge the object 350 along, for example, the X-axis (see FIG. 3C). The scaling tool 300c can, in other embodiment, be utilized to scale or otherwise alter the size of the object 350 along the X and Z axes. Scaling can be further divided into one, two, and three-dimensional scaling depending on whether the object is scaled along a line, on a plane, or in all three dimensions.

In operation, the editing tool routine 202 generates the unified tool 300 by executing the processor-executable instructions that comprise the graphical editing module 200 via the processor 102. The basic unified tool 300 design includes a direct manipulation graphical marker or tool origin 302 that may be placed over or nearby the object 350 defined with the 3-D model to be modified. The unified tool 300 may further include one or more pairs of handles 304, 306 and 308. Each pair of handles includes a first handle and a second handle. For example, the handle pair 304 includes a first handle 304a and a second handle 304b aligned along the Y-axis as shown in FIG. 3A. Similarly, the handle pairs 306 and 308 includes individual handles 306a, 306b, 308a and 308b aligned along the X and Z axes, respectively. In one embodiment, a user (not shown) may select one of the handles 304a/b to 308a/b and/or the tool original via the tablet 128, mouse or other input device to activate the functions currently associated with the selected handle, and then, for example, drags the selected handle or origin to a new screen location on the display 126. Upon release or de-selection of the handle or tool origin portion of the unified tool 300, the object 350 is dropped or otherwise positioned at the new location.

The translation tool 300a, as shown in FIG. 3A, includes the tool origin 302 and up to six operational markers or handles or 304a/b to 308a/b. The tool origin 302 represents, in this exemplary embodiment, a center of rotation or scaling depending on which of the modules 206 and 208 is performing an operation. If, for example, the translate module 204 is active, then the editing tool routine 202 can reposition the object 350 based on the movement of the tool origin 302 in response to a user command received through the input driver 112. This type of center or origin dragging follows a "one axis at a time" scheme where the direction in which the object 300 is dragged determines which axis the translation tool 300a will follow. For example, the translate module 204 determines which axis is closest in angle to the movement of the cursor in response to a user input, and then the object 350 is moved along that axis. When the closest axis in angle is co-aligned with another, the axis that points outward from the display 126 (e.g., the Z-axis in FIG. 3A) is selected by the translate module 204. By selecting or otherwise indicating one of the handles comprising the handle pairs 304 to 308, the editing tool routine 202 causes the operation associated with the selected handle to be displayed and performed. For the translation tool 300a including translation handles 304a/b to 308a/b shown in FIG. 3A, all six handles are shown as triangles pointing away from the tool origin 302. Selecting and repositioning or dragging one of the handles (e.g., handle 306a along the X-axis), causes the graphical editing module 200 to translates the object 350 along that axis.

FIG. 3B illustrates a tool configuration displayed via the display 126 when the rotate module 206 is activated by the editing tool routine 202. In this configuration, the rotation tool 300b includes two rotation handle pairs 310 and 312. The individual handles 310a, 310b, 312a and 312b of the rotation handle pairs 310 and 312 are arranged equidistant about the tool origin 302 along the X-axis and Y-axis, respectively. In the embodiment shown, the rotate module 206 suppresses or hides the handles associated with the Z-axis (i.e., handles 308a and 308b in FIG. 3A) to differentiate the rotation tool 300b and the associated function from other tools. By hiding the handles associated with the Z-axis, the rotation tool 300b can be made visually distinct and highlights that the plane of rotation, in the exemplary configuration, is defined by the X-Y axes around the Z-axis running through the tool origin 302. In operation, the handles 310a/b and 312a/b can be rotated relative to the global coordinates of the 3-D model which may result in the illustrated Z-axis not aligning with the Z-axis of the world. In other embodiments, the rotate module 206 allows for greater freedom of movement for each of handles 310a/b and 312a/b. For example, by selecting the handle 312b, the object 350 can be rotated about the Z-axis along the X-Y plane. Alternatively, the handle 312b can be utilized to rotate the object 350 can be rotated about the X-axis along the Z-Y plane. In other embodiments and example, the orientation of the handles and handle pairs as well as the center of rotation may be changed to rotate objects in different manners and/or along different axes and planes.

FIG. 3C illustrates a tool configuration displayed via the display 126 when the scale module 208 is activated by the editing tool routine 202. In this configuration, the scaling tool 300c includes a scale handle pair 314 including individual handles 314a, and 314b arranged equidistance about the tool center 302 along the X-axis. In the embodiment shown, the scale module 208 suppresses or hides the handles associated with the Y and Z axes (i.e., handles 304a, 304b, 308a and 308b in FIG. 3A) to differentiate the scaling tool 300c from tools 300a and 300b. By selecting and dragging the scaling handles 314a and 314b, the scale module 208 and the editing tool routine 202 portions of the graphical editing module 200 cause the 3-D model displayed on the display 126 to be stretched (i.e., either increased of decreased proportionally) about the tool origin 302. Thus, dragging one of the handles 314a and 314b resizes the object 350 in direct proportion to the amount the handle is moved relative to the tool center 302. The scaling module 208 can be configured to perform a scaling operation of the object 350 along a single axis, on a plane, or in all three dimensions. In other embodiments, the orientation of the handles and handle pairs as well as the tool origin or other identifiable center of scaling may be changed to scale objects in different manners.

In operation, the unified tool 300 provides a mechanism by which the graphical editing module 200 can manipulate and control objects within a 3-D object. For example, the handle pairs 304 to 308, (FIG. 3A) 310 and 312 (FIG. 3B) and 314 (FIG. 3C) may be utilized by the graphical editing module 200 in a normal operating mode or state to move, rotate and resize the currently selected object or set of objects. The graphical editing module 200 may identify or highlight a selected object or objects. For example, as the focus of the graphical editing module 200 is shifted in response to a command or input received from, for example, the table 128; objects defined within the 3-D model may be highlighted to indicate the path of focus across the display 126. In one embodiment, the selection or focus may be indicated by highlighting behind lines or edges to make them seem to glow, utilizing, for example, a pinkish color. Similarly, faces or surfaces of the 3-D model may be highlighted and identified using a stipple pattern or any other technique to simulate varying depth or solidity. For example, the faces or surface may be represented utilizing grayscale or shading techniques to define represent or highlight the solidity of the surface or face.

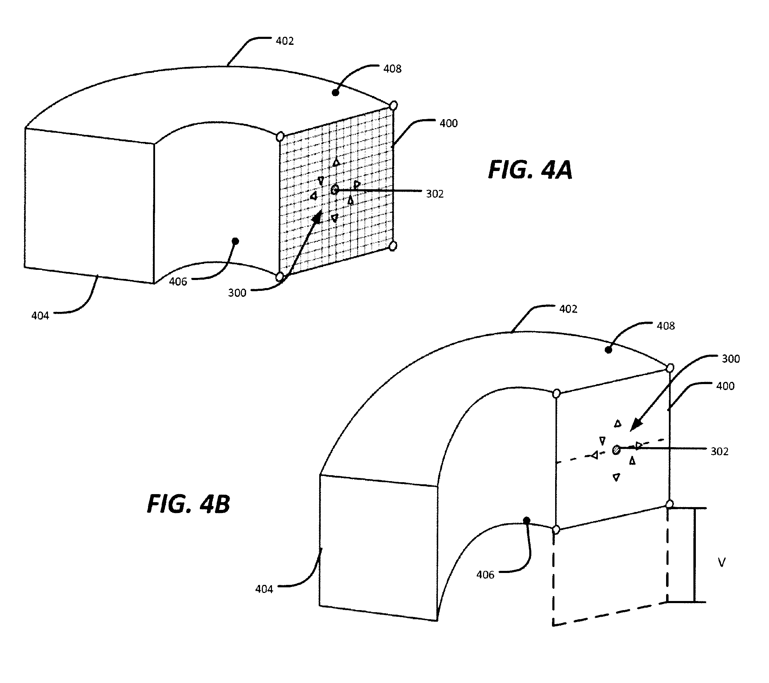

FIGS. 4A and 4B illustrate a selected object 400 which may be modified and manipulated by the unified tool 300. For example, the translation tool 300a, when associated with the object 400, may be manipulated and controlled to alter or shift the position of the object 400 by adding the offset vector V (see FIG. 4B) to the objects' coordinates.

In this exemplary embodiment, the object 400 is a planar surface of a revolved shape 402. In this example, the revolved shape 402 includes a fixed object or surface 404 coupled to the object 400 along surface objects 406 and 408. In operation the translation tool 300a may be affixed to and/or associated with the planar surface comprising the object 400. The object 402 is considered fixed in this example because it is not selected or otherwise associated with the unified tool 300. When the translation tool 300a configuration of the unified tool 300 shifts and moves the object 400 upward by the offset vector V, the graphical editing module 200 treats the fixed object 404 as stationary and distorts or modifies the contoured surface objects 406 and 408 that form the revolved shape 402. In this way, the graphical editing module 200 and the translation module 204 maintain the location of the unselected and fixed object 404 while allowing for translation of identified object 400 associated with the translation tool 300a. This functionality allows the graphical editing module 200 and the translation module 204 to manipulate and edit objects and models having or containing both selected and unselected points, lines and surfaces.

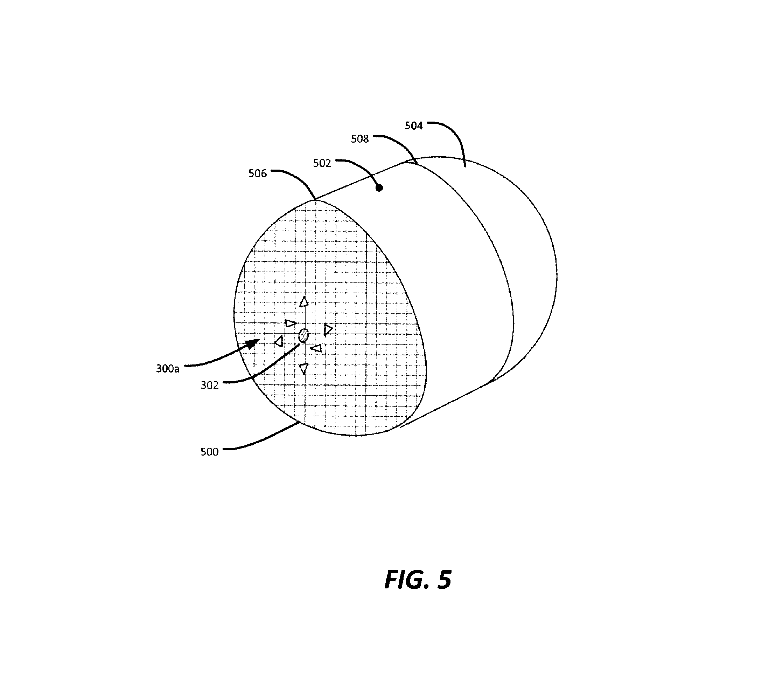

FIG. 5 illustrates another example of an object 500 associated with the translation tool 300a that may be translated relative to a fixed object 504 by the graphical editing module 200. In this embodiment and configuration, the object 500 couples to, and is connected with, the fixed object 504 by a cylindrical shape or surface 502. When the translation tool 300a shifts and moves the object 500 axially away from the fixed object 504, the graphical editing module 200 stretches and distorts the cylindrical shape or surface 502 along the selected edge or transition 506 in the direction of axial translation while maintaining the fixed (i.e., unselected) object 504 connected along the unselected edge 508. In other words, the cylindrical shape 502 stretches relative to the fixed loop 504 based on the translation of the object 500 and the translation tool 300a.

In another embodiment, the graphical editing module 200, in conjunction with the modules 204 to 208, may extrude and revolve a point into a line; an edge into a surface, and a surface into a solid. Activation or utilization of the extrusion functionality may, in one or more embodiments, cause or result in the editing tool routine 202 updating or altering the modal indicator to reflect the activated extrusion functionality. For example, the translation tool 300a may be utilized in conjunction with an extrude function to translate a point into a line representing a linear pathway while the rotation tool 300b may be utilized to define or establish a curved line that defines a curvilinear pathway. In this way, the unified tool 300 may be utilized to generate a pathway along which an object can be extruded or swept. Pathways may be any combination of linear or curved elements and/or line segments. Objects defined by extrusion along a constructed pathway may, in this way, display a complicated geometry. In this example, the modal indication may set a flag or value that indicates to the editing tool routine 202 and/or the graphical editing module 200 that the extrusion and translation functionalities are active and/or in use to manipulate objects or elements within the 3-D model.

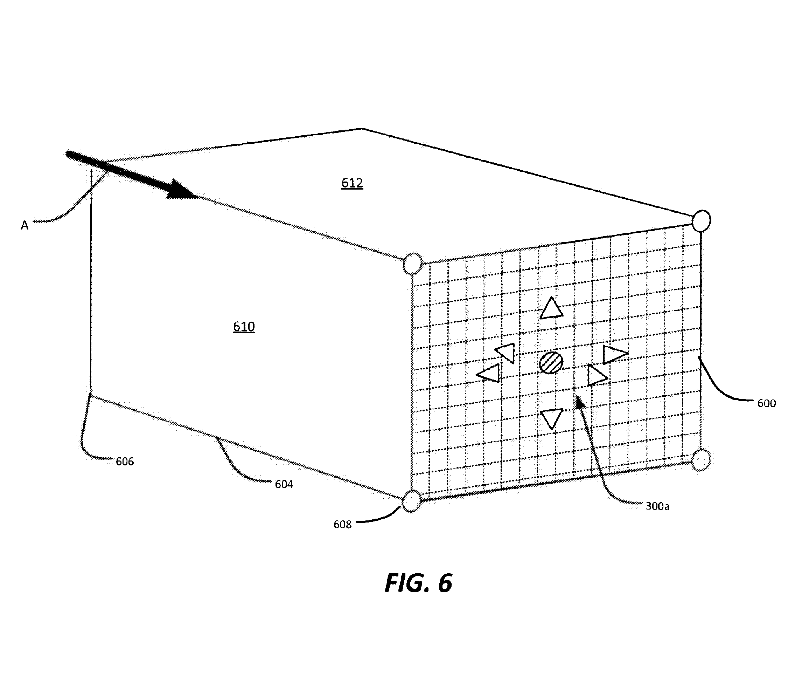

FIG. 6 illustrates an example of a simple rectangular shape 602 formed by the translation of a square surface or object 600 along a linear pathway 604 (in the direction indicated by the arrow A) between an initial point 606 and an end point 608. In this example, the translation tool 300a may be used in combination with the extrude functionality to create swept surface 610 and 612 by sweeping the object 600 from the initial point 606 to the end point 608. By utilizing the rotation tool 300b and the scaling tool 300c in conjunction with the translation tool 300a, the geometry and layout of the swept surfaces 610 and 612 can be further customized.

In other embodiments, the graphical editing module 200 and the unified tool 300 may employ the scaling functionality of scale module 408 to linearly translate objects while simultaneously resizing entire geometry of the translated object. In this way, the graphical editing module 200 may implement the unified tool 300 to create and define a complicated swept surface and object. These swept objects maintain the original geometry of the object upon which they are based while creating or defining the swept surfaces (e.g., surface 610 and 612) that tie and connect the original geometry to the moved geometry.

An object may become a swept object under two conditions: (1) the object has adjacent parts that are not selected and other adjacent parts are selected, or (2) the object consists of an isolated group of one or two dimensions. The case with partially selected adjacent parts arises when parts of an object are selected and other portions or elements are not. An example of an object having unselected elements is a surface (such as the object 400) having an unselected hole or cutout defined within an interior portion. In this example, the surface, including the edge surrounding or defining the hole, may be swept along a pathway in response to the movement of a unified tool 300. Thus, the unselected hole remains empty or open while the surface is swept along a defined pathway by the movement of the unified tool 300. The resulting swept object is a hollow or open construct having an exterior bounded by swept surfaces defined by the selected edges and an interior defined by the surfaces defined by the unselected edges of the hole.

The graphical editing module 200 may detect and analyze objects such as a surface to determine if an edge or exterior of the object exists and can be defined on both sides of a given surface. For a simple polyhedron with no self-intersections, search performed by the graphical editing module 200 may be relatively simply. However, if the polyhedron has self-intersections, the intersections can be used to divide the intersecting surfaces to convert the polyhedron into a simple object. Once the sheet surfaces of a polyhedron have been defined, the surfaces can be considered a two-dimensional isolated geometry and its boundary would contribute to a swept surface.

The graphical editing module 200 may selectively activate and deactivate the extrude functionality to further customize the geometry of an object. In this way, a series of swept surfaces can be generated by following a selected set of objects through a complex pathway of movements.

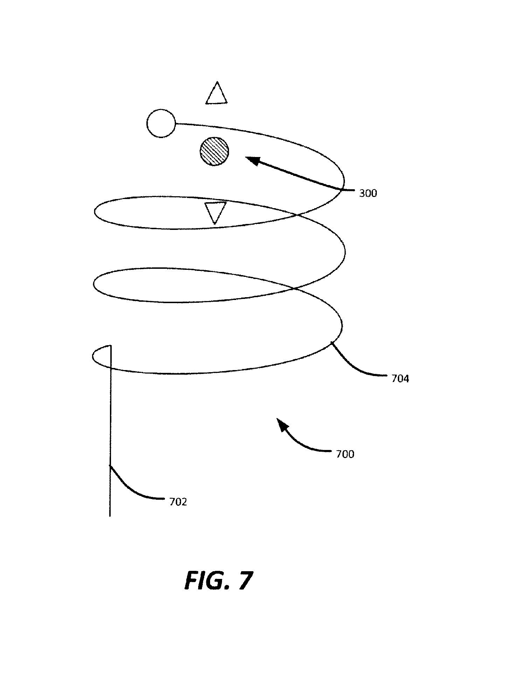

FIG. 7 illustrates a pathway that may be defined by the unified tool 300. The pathway 700, in turn, can be utilized in a surface sweeping operation in conjunction with the extrude functionality to generate a complicated three dimensional object. For example, a point can be extruded to define the linear pathway 702 using the translation tool 300a. The graphical editing module 200 may, in turn, utilize the rotation tool 300b of the unified tool 300 to combine linear and rotary handle motion during an extrusion operation. For example, a curvilinear pathway 704 can be defined rotating a point around a circle several times and then switches the rotation tool 300b to the translation tool 300a. The pathways 702 and 704 can, in turn, be linked or joined to define the pathway 700. The same result can be achieved by rotating a point about an axis using the rotation tool 300a and subsequently using the translation tool 300a to define the line.

The graphical editing module 200 automatically orients handles and removes choices that are not feasible. For example, when the user revolves an object, the direction for spiral translation can only be along the axis of rotation. In this way, the graphical editing module 200 can remove or hide handles for directions that are not allowed and orients the handles to be along the axis of rotation. Performing scaling operations will likewise create situations where following rotations or translations are not allowed and the system will remove handles appropriately.

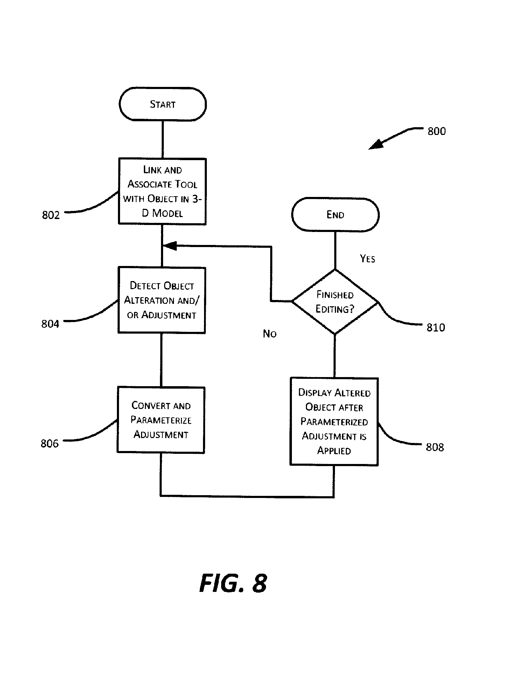

FIG. 8 depicts an operation flowchart 800 of the operations a graphical editing tool can implement to manipulate and control objects within a three-dimensional (3-D) model. The graphical editing module 200 initiates operation when the unified tool 300, and more particularly a tool origin of the 3-D graphical editing tool, is associated or linked to with an object within the 3-D model (802). The unified tool 300 includes, in one embodiment, three pairs of tool handles arranged such that each pair of tool handles is orthogonal to the other pairs and equidistant from tool origin. The graphical editing module 200 subsequently receives an indication to alter and adjust a displayed position of one or more of the tool handles (804). For example, a user may adjust the position of one of the tool handles via an input device such as a tablet 128 and the graphical editing module 200 displays the adjustment as movement on the display 126. The adjustment may include a translation offset, a rotational vector, a scaling command or any combination thereof. These commands and adjustments may be provided to the graphical editing module 200 via the unified handle 300. The graphical editing module 200 next converts the received adjustment into a parameter that alters the object within the 3-D model (806). The altered and adjusted object may be displayed by the graphical editing module 200 via a display device for further adjustment as instructed and received via the unified handle 300 (808). This process can repeat (810) or otherwise continue (see 804) until the editing functionality is ended by the graphical editing module 200 or trigger ends the editing process.

As used herein, the term "object" is intended to include individual model elements such as points, lines, surfaces and edges as well as collections of objects such as shapes, model elements and components. Thus, the term "object" is intended to refer to and identify any element that can be selected, unselected and otherwise discerned and differentiated by a user or one or more modules and routines of the disclosed editing mechanism.

It should be understood that various changes and modifications to the presently preferred embodiments described herein will be apparent to those skilled in the art. Such changes and modifications can be made without departing from the spirit and scope of the present invention and without diminishing its intended advantages. It is therefore intended that such changes and modifications be covered by the appended claims.

## Claims

1. A computer-implemented tool (300) for manipulating and controlling objects within a three-dimensional (3-D) model, wherein the tool is generated by a model editor stored in a memory (104) and executed by a processor (102), the tool comprising:
a modal indication of state for whether to perform an extrusion operation;
a tool origin (302) configured to indicate an object (350) defined within the 3-D model;
a tool handle pair (306) including a first handle (306a) and a second handle (306b), wherein the first handle (306a) and the second handle (306b) are arranged linearly along an axis that extends through the tool origin (302) such that the axially aligned first handle (306a) is arrange opposite to the axially aligned second handle (306b) with the tool origin (302) disposed therebetween;
wherein the axis is aligned with a second axis corresponding to the object, and wherein, in response to an input associated with one of the handles (306), the processor (102) configured to generate the 3-D model and implement the model editor alters the object indicated by the tool origin (302); and
wherein, the alteration to the object (350) may include an alteration of a position/orientation of the object (350) as well as production of new geometry dependent on the modal indication.

2. The tool of claim 1, wherein first handle (306a) and the second handle (306a) of the tool handle pair (306) are aligned along an X-axis.

3. The tool of claim 2, wherein the tool handle pair includes a second tool (304) handle pair aligned along an Y-axis.

4. The tool of claim 3, wherein the tool handle pair includes a third tool handle pair (308) aligned along an Z-axis.

5. The tool of claim 4, wherein the input corresponds to one of the first and second handles (306a, 306b) defined in connection with the three tool handles pairs and wherein the input represents a change in a parameter defining the object along the axis associated with the one of the first and second handles (306a, 306b).

6. The tool of claim 4, wherein the handles of each of the first (306), second (304) and third (308) tool handle pairs are configured to reflect an operational state of the model editor.

7. The tool of claim 6, wherein the operational state is selected from the group consisting of: a translation state; a scaling state; and a rotational state.

8. A computer-implemented method of manipulating and controlling objects within a three-dimensional (3-D) model, wherein the method is implemented by a processor (102) executing a model editor (124) stored in a memory (104), the method comprising:
receiving, via the model editor (124), a command associated with a 3-D graphical editing tool (300) having a tool origin (302) and pairs of tool handles (304, 306, 308) arranged on opposite sides of the tool origin (302) along Cartesian axes running therethrough,
wherein the tool origin (302) is associated with an object (400) within the 3-D model, and
wherein the command is associated with a parameter defining the object and represents a modal extrusion state;
displaying, via the model editor (124), an altered position of one of the pair of handles (304) representative of the received command wherein the position of the altered handle reflects a change in the parameter;
updating, via the model editor (124), the 3-D model and object (400) defined by the parameter to reflect the change in the parameter and the modal extrusion state.

9. The method of claim 8, wherein updating the 3-D model and object (400) includes translating the object along one or more of the Cartesian axes to reflect the change in the parameter.

10. The method of claim 8, wherein updating the 3-D model and object (400) includes stretching the object (400) relative to a fixed object (404) defined within the 3-D model to reflect the change in the parameter.

11. The method of claim 8, wherein updating the 3-D model and object (400) includes rotating the object (400) relative to a fixed object defined within the 3-D model to reflect the change in the parameter.

12. The method of claim 8, wherein the command represents a pathway (700) along which the object is extruded.

13. The method of claim 12, wherein the pathway (700) is a linear pathway (702), a circular pathway (704) or any combination of the two.

14. The method of claim 8, wherein the pairs of tool handles comprise three pairs of tool (304, 306, 308) handles arranged along the Cartesian axes, and wherein the received command is a translate command.

15. The method of claim 14, wherein the command is a rotation command that instructs the 3-D graphical editing tool to hide one of the three pairs of tool handles (304, 306, 308) such that the remaining pairs of tool handles define a plane.

16. The method of claim 14, wherein the command is a scaling command that instructs the 3-D graphical editing tool to hide two of the three pairs of tool handles (304, 306, 308) such that the remaining pairs of tool handles define a line.

17. A computer-implemented method of manipulating and controlling objects within a three-dimensional (3-D) model, wherein the method executes on a processor (102) based on executable instructions stored in a memory (104), the method comprising:
receiving a command via an input device (128) in communication with a 3-D graphical editing tool (200);
associating, in response to the received command, a tool origin (302) of the 3-D graphical editing tool (300) with an object within the 3-D model,
wherein the 3-D graphical editing tool (300) includes three pairs of tool handles (304, 306, 308) arranged such that each pair of tool handles is orthogonal to the other pairs and equidistant from tool origin;
receiving an indication to alter a displayed position of one or more of the tool (304, 306, 308) handles;
converting the received indication into a parameter that alters the object within the 3-D model; and
displaying, via a display device (126), an altered object and 3-D model.

18. The method of claim 14, wherein the parameter defines a pathway (700).

19. The method of claim 14, wherein the pathway is a linear pathway (702), an irregular pathway (704) and any combination thereof.

20. The method of claim 14, wherein the received command is a translate command.

21. The method of claim 17, wherein the received command is a rotation command that instructs the 3-D graphical editing tool (200) to hide one of the pairs of tools handles (304, 306, 308) such that the remaining pairs of tool handles define a plane.

22. The method of claim 18, wherein the received command is a scaling command that instructs the 3-D graphical editing tool to hide one of the three pairs of tool handles (304, 306, 308) such that the remaining pairs of tool handles define a line.
